(19) Europäisches Patentamt / European Patent Office / Office européen des brevets

(11) **EP 4 552 085 B1**

(12) **EUROPEAN PATENT SPECIFICATION**


(45) Date of publication and mention of the grant of the patent:
**17.06.2026 Bulletin 2026/25**

(21) Application number: **23736139.9**

(22) Date of filing: **30.06.2023**

(51) International Patent Classification (IPC):
***G06T 11/00*** *(2026.01)* ***G01J 3/46*** *(2006.01)*
***G06Q 30/0601*** *(2023.01)* ***G06T 11/60*** *(2026.01)*
***G06T 19/00*** *(2011.01)* ***G06V 10/00*** *(2022.01)*

(52) Cooperative Patent Classification (CPC):
**G06T 11/10; G01J 3/0264; G01J 3/0272; G01J 3/463; G01J 3/50; G01J 3/526; G06Q 30/0621; G06Q 30/0623; G06Q 30/0631; G06Q 30/0643; G06T 11/60;** G06V 10/56; G06V 40/162; G06V 40/169

(86) International application number:
**PCT/EP2023/068034**

(87) International publication number:
**WO 2024/008581 (11.01.2024 Gazette 2024/02)**


(54) **METHOD FOR DETERMINING PARAMETERS RELATIVE TO THE COLORATION OF A BODY ZONE OF AN INDIVIDUAL**

VERFAHREN ZUR BESTIMMUNG VON PARAMETERN BEZÜGLICH DER FÄRBUNG EINER KÖRPERZONE EINES INDIVIDUUMS

PROCÉDÉ DE DÉTERMINATION DE PARAMÈTRES RELATIFS À LA COLORATION D’UNE ZONE CORPORELLE D’UN INDIVIDU


(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **05.07.2022 FR 2206842**

(43) Date of publication of application:
**14.05.2025 Bulletin 2025/20**



(73) Proprietor: **L’OREAL**
**75008 Paris (FR)**

(72) Inventors:
- **ASKENAZI, Benjamin**
  **93400 SAINT OUEN (FR)**
- **AURIAU, Vincent**
  **93400 SAINT OUEN (FR)**
- **MALHERBE, Emmanuel**
  **92110 CLICHY (FR)**

(74) Representative: **Lavoix**
**2, place d’Estienne d’Orves**
**75441 Paris Cedex 09 (FR)**



(56) References cited:
**WO-A1-2005/124302 FR-A1- 3 097 730**

- **MEEREH CANDICE KIM ET AL: "Color reproduction in virtual lip makeup using a convolutional neural network", COLOR RESEARCH & APPLICATION, JOHN WILEY & SONS, INC, US, vol. 45, no. 6, 13 August 2020 (2020-08-13), pages 1190 - 1201, XP071631905, ISSN: 0361-2317, DOI: 10.1002/COL.22549**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 4 552 085 B1

## Description

The present invention relates to a method for determining parameter relating to the coloration of a body zone of an individual, such as hairs, skin, or a nail. The present invention also relates to an associated determining device.

An objective of the cosmetic industry is to improve the experience of its consumers. There is in particular a strong trend to propose products that are increasingly adapted to the needs and characteristics specific to the user. This trend is generally called "customization".

Customizing cosmetic products and services can concern any part of the human body but is of particular interest for exposed body parts, such as the face (makeup or care products, in particular foundations) and the hair (care or coloring products for example).

Thus, it is known to recommend suitable foundations using one or more characteristic(s) of the skin of a user (for example "Le Teint Particulier"® by LANCOME®). It is also known to offer customised haircare products, the composition of which is determined from different properties of the hair of the user (cf. for example the document EP 0 443 741, as well as the documents WO 2004/002300 A2 and US 9 316 580 B).

The notion of customization goes beyond the simple fact of offering a more or less wide range of products each corresponding to a user category, a difficulty often being to be able to recommend the product that is best suited for the user according to individual specific characteristics.

As described in the documents mentioned hereinabove, the notion of customization generally comprises a first step of analysis aiming to obtain one or more pieces of data specific to the user concerned, with this data then being used to determine a suitable treatment and/or one or more suitable products intended to be applied on the concerned body part of the user.

Until recently, the step of analysis was often conducted manually or visually by an expert such as a hairdresser or a beauty adviser. It is in particular known to have the user fill out a questionnaire whose responses can be used to recommended for them the product that is supposed to be the most suited (see in particular document US 2014/0216492 A). It appears obviously that such a technique is highly uncertain and lacks precision.

With the purpose of improving the relevancy and the reliability of the recommendation of products, one or more steps can be conducted by using tools or devices and can even be automated.

Thus, all or part of the initial characteristics specific to the user could be obtained by objective measurements using an adequate measuring device. An example of such device is the CAPSURE device marketed by the company X-RITE, with this being designed to return a color code representative of the color of the material measured, for example, the skin of a user (see in particular document US 2010/0328667 A although this document does not explicitly target the skin or the keratin surfaces).

Furthermore, in order to assist the user in the selection of the products, augmented reality software is also known allowing virtually trying on make-up products. In general, such software allows, starting from a digital image of a user, calculating and generating a corresponding image showing the make-up effect likely to be obtained when applying the considered product. Such systems are known for virtual try-on of foundations, lipsticks, or capillary dying in the same fashion as those for garments or for spectacles. Thanks to such a system, a user can easily assess directly and immediately the make-up result of several products without having to buy them, make up therewith and remove the make-up. Examples of methods for virtual try-on ("virtual try-on") of make-up products are described, for example, in the documents US20200160153A1 and US9449412B1 as well as in the applications FR21/06030, FR21/11155 and FR21/11164 on the name of the Applicant and still not published. Further prior art documents relating to colour analysis in virtual try-on include patent publications FR3097730 A1, WO2005/124302 A1 and the non-patent publication by Meereh Candice Kim et al.: "Color reproduction in virtual lip makeup using a convolutional neural network", COLOR RESEARCH & APPLICATION, vol. 45, no. 6, pages 1190-1201.

Nevertheless, these tools could also be improved to offer to a user a rendering the closest to the desired rendering.

Hence, there is a need to facilitate and improve accuracy in the determination of parameters relating to the coloration of a body zone of an individual, such as hairs, skin, or a nail.

To this end, an object of the present description is a method for determining parameters relating to the coloration of a body zone of an individual, such as hairs, skin, or a nail, the method comprising the steps of:

- selecting a sample for an individual amongst a set of samples, each sample of the set being a sample representative of a body zone and having a reference colour distinct from the other samples, each sample having an identifier visible on the sample, the identifier of each sample being associated with a colorimetric data representative of the reference colour of the sample, so-called sample reference data, the sample reference data of each identifier being memorised in a database,
- acquiring, by a sensor, an image, so-called initial image, imaging both the selected sample and a corresponding body zone of the individual,

- processing the initial image, by a calculator, so as to obtain:

  ◦ the sample reference data of the sample imaged on the initial image according to the identifier of said sample and the database accessible by the calculator,
  ◦ a colorimetric data representative of the actual colour of the sample on the initial image, so-called sample actual data,

  the sample reference data and the sample actual data forming parameters relating to the coloration of the body zone of the individual.

According to particular implementations, the method comprises one or more of the following features, considered separately or according to any technically feasible combination:

- the method comprises a step of determining, by the calculator, the influence of the environment on the colorimetric rendering of the body zone of the individual by comparison of the sample reference data with the sample actual data;
- the method comprises a step of virtual try-on of the selected sample, comprising:

  ◦ modifying, by the calculator, the initial image according to the sample actual data so that the colour of the body zone of the individual on the initial image is replaced by the actual colour of the sample on the initial image, the modified initial image forming a rendered image, and
  ◦ displaying the rendered image on a display;

- the method comprises a step of determining, by the calculator, a coloration for the body zone of the individual according to the initial image, the sample reference data and the sample actual data, upon reception of a command validating the rendering image;
- the step of determining a coloration comprises determining a colorimetric data representative of the actual colour of the body zone of the individual on the initial image, called individual actual data, the coloration of the body zone of the individual being determined according to the individual actual data, the sample reference data and the sample actual data;
- the step of determining a coloration further comprises:

  ◦ determining a colorimetric discrepancy between the sample reference data and the sample actual data,
  ◦ determining a colorimetric data representative of a reference colour for the body area of the individual, so-called individual reference data, according to the individual actual data and the discrepancy,
  ◦ the coloration of the body zone of the individual being determined according to the individual reference data and the sample reference data;

- the processing step comprises highlighting the sample on the initial image and determining the sample actual data over the portion of the initial image featuring the sample;
- highlighting is carried out by segmentation or is carried out by extraction of the zone around the identifier of the sample on the initial image after identification of the identifier on the initial image;
- the samples are selected from the list including: photographs, post-its, fabrics, figurines, miniature products and real or fake samples of parts of the human body, such as locks of hair, imitation skin samples, fake eyelashes, fake eyebrows or fake nails;
- the identifier is selected from among: a number, a series of alphanumeric characters, a barcode, a radio identification marker, a near-field communication marker and a marker allowing a visual identification.

The present description also relates to a device for determining parameters relative to the coloration of a body zone of an individual, such as hairs, skin, or a nail, following the selection of a sample for an individual amongst a set of samples, each sample of the set being a sample representative of a body zone and having a reference colour distinct from the other samples, each sample having an identifier visible on the sample, the identifier of each sample being associated with a colorimetric data representative of the reference colour of the sample, so-called sample reference data, the sample reference data of each identifier being memorised in a database, the device comprising:

- a sensor capable of acquiring an image, so-called initial image imaging both the selected sample and a corresponding body zone of the individual,
- a calculator having access to the database, the calculator being configured to process the initial image so as to obtain:

◦ the sample reference data of the sample imaged on the initial image according to the identifier of said sample and the database accessible by the calculator,
◦ a colorimetric data representative of the actual colour of the sample on the initial image, so-called sample actual data,
◦ the sample reference data and the sample actual data forming parameters relating to the coloration of the body zone of the individual.

Other features and advantages of the invention will appear when reading the following description, embodiments of the invention, provided solely as an example and with reference to the drawings which are:

[Fig 1], Figure 1 is a schematic representation of an example of a set of samples,
[Fig 2], Figure 2 is a schematic representation of an example of a device for determining parameters relating to the coloration of a body zone of an individual,
[Fig 3], Figure 3 is a flowchart of an example of implementation of a method for determining parameters relating to the coloration of a body zone of an individual, and
[Fig 4], Figure 4 is a schematic representation of the implementation of some steps of the method of Figure 3.

In the following description, a body zone refers for example to hairs, skin, or one or more nail(s) of an individual. A particular example thereof is given with hairs, in particular hair (Figures 1 and 4). Nevertheless, the present description applies to any other body zone type.
In the rest of description, the term "hairs" designates all the types of hairs of an individual regardless of their location on the body surface of the individual. Hairs encompass the hair system of the individual. The hair, eyelashes and eyebrows are examples of hairs.
In general, the term "cosmetic product" refers to any product as defined in the regulations (EC) No. 1223/2009 of the European Parliament and of the Council of November 30th, 2009 on cosmetic products. More particularly, a make-up cosmetic product is intended to cover a body surface in order to modify its perceived colour and/or the texture. In particular, the cosmetic product concept covers any substance or mixture intended to be brought into contact with the surface parts of the human body (epidermis, follicular and capillary systems, nails, lips and external genital organs) or with the teeth and oral mucosa in order to, exclusively or primarily, clean them, perfume them, change their appearance, protect them, keep them in good condition or correct bodily odours.
For example, the cosmetic product is a dye formula, also called "dye", or a product such as a cream or a fluid, intended to be brought into contact with the body zone to dye it. Such a coloring is permanent or temporary.
The term "colour" for a cosmetic product refers to the visible colour or the rendering of the colour once the cosmetic product is applied on the body zone of a reference individual or a model of the body zone. For example, in the case of hairs, given the differences in nature and lifetime of the hairs from one individual to another, the rendering of the colour may vary once the cosmetic product is applied on the hairs of a given individual compared to the rendering obtained for the reference individual or the model of the hairs.
Figure 1 illustrates an example of a set of samples 10.
The set of samples 10 comprises at least two samples 10, advantageously more than two samples 10. Samples 10 are objects than can be manipulated by an individual.
Each sample 10 is representative of a body zone. The body zone being, for example, hairs, skin, or one or more nail(s) of an individual.
Advantageously, the samples 10 are selected from the list including: photographs, post-its, fabrics, figurines, miniature products and real or fake samples of parts of the human body, such as locks of hair (real or fake), imitation skin samples, fake eyelashes, fake eyebrows or fake nails.
In the particular example illustrated by Figure 1, the set of samples is a set of hairs, in particular locks of hair forming a hair colour chart.
Each sample 10 has a reference colour distinct from the other samples 10. By "reference colour", it should be understood a predefined colour for the sample 10, which for example has been obtained by positioning the object in a predefined environment. For example, the reference colour has been measured in this environment by a sensor, such as a spectrocolorimeter.
Advantageously, each sample 10 is attached, detachably or not, on the same support. Preferably, the support is portable by the individual, or can be manipulated by the individual.
For example, the support is a catalogue. By "catalogue", it should be understood a work in which the samples 10 are recorded. In the case where the samples 10 are locks of hair, such a catalogue thus forms a hair colour chart.
Each sample 10 is associated with an identifier 10A. By "Identifier", it should be understood a data allowing identifying a sample 10 amongst a set of samples 10.
The identifier 10A is visible on the sample 10. For example, the identifier 10A is marked in or is an integral part of the sample 10.

Advantageously, the identifier 10A of each sample 10 is unique.

For example, the identifiers 10A are selected from the list including: a number, a series of alphanumeric characters, a barcode, a radio-identification marker (RFID chip), a near-field communication marker (NFC chip) and a marker enabling a visual identification. For example, the barcode is a QR (acronym for *Quick Response*) code.

The identifier 10A of each sample 10 is associated with a colorimetric data representative of the reference colour of the sample 10, so-called sample reference data $D_{ref_E}$. For example, the sample reference data $D_{ref_E}$ has been obtained via a measurement made by a spectrocolorimeter.

The sample reference data $D_{ref_E}$ of each identifier 10A is memorised in a database 11. Thus, knowing the identifier 10A, the sample reference data $D_{ref_E}$ is, for example, obtained via a look-up table memorised in the database 11.

Figure 2 illustrates an example of a device 12 for determining parameters relating to the coloration of a body zone of an individual.

The device 12 comprises a sensor 13 a calculator 14.

The sensor 13 is capable of acquiring images of an environment.

For example, the sensor 13 is a video-camera or a camera.

The calculator 14 is capable of interacting with a computer program product 18. The interaction of the computer program product 18 with the calculator 14 allows implementing steps of a method for determining parameters relating to the coloration of a body zone of an individual.

For example, the calculator 14 is a computer. More generally, the calculator 14 is an electronic calculator able to manipulate and/or transform data represented as electronic or physical quantities in registers of the calculator 14 and/or memories into other similar data corresponding to physical data in memories, registers or other types of display, transmission or storage devices.

The calculator 14 includes a processor 20 comprising a processing unit 22, memories 24 and an information medium reader 26. In the example illustrated by Figure 2, the calculator 14 also comprises a human-machine interface 27 comprising, for example, a keyboard 28 and/or a touch-sensitive interface and a display 30.

The computer program 18 comprises a legible information support. A readable information medium is a medium readable by the calculator 14, usually by the processing unit 22 of the calculator 14. The readable information medium is a medium adapted to memorise electronic instructions and capable of being coupled with a bus of a computer system.

For example, the readable information medium is a USB flash disk, a floppy disk or flexible disk ("floppy disk"), an optical disk, a CD-ROM, a magnetic-optical disk, a ROM memory, a RAM memory, an EPROM memory, an EEPROM memory, a magnetic card or an optical card.

A computer program containing program instructions is stored on the legible information support. The computer program can be loaded on the data processing unit 22 and is adapted to cause the implementation of at least one of the steps of a method for determining parameters relating to the coloration of a body zone of an individual.

The determining device 12 has access to the database 11 in which the identifiers 10A and the corresponding sample reference data $D_{ref_E}$ are memorised.

For example, the database 11 is memorised on a remote server of the determining device 12, the access to the database 11 then being done according to a wireless transmission protocol or according to a cellular telecommunications network protocol. For example, the wireless transmission protocol is established according to the standards of the group IEEE 802.11 (Wi-Fi) or the group IEEE 802.15 (Bluetooth). For example, the cellular telecommunications network protocol is established according to the GSM (*Global System for Mobile Communications*) standard or according to the UMTS (*Universal Mobile Telecommunications System*), 4G, or 5G technologies.

Alternatively, the database 11 is memorised in a memory 24 of the calculator 14, which makes it directly accessible by the calculator 14 without any wireless transmission protocol or cellular telecommunications network.

In an example of implementation, the determination device 12 is a connected object. For example, the determination device 12 is a smartphone, a tablet, a connected mirror or any other connected object provided with an image acquisition sensor. In this case, the sensor 13 and the calculator 14 are an integral part of the smartphone, the tablet, the connected mirror or more generally the connected object.

An example of implementation of a method for determining parameters relating to the coloration of a body zone, in particular hairs such as hair of an individual, is now described with reference to the flowchart of Figure 3 and to the explanatory diagram of Figure 4.

The determination method comprises a step 100 of selecting a sample 10 for the individual amongst the set of samples 10.

By "for the individual", it should be understood the selection is performed while taking account of the desires and/or needs of the individual. Hence, the selection will a priori be different from one individual to another. Thus, the selection is specific to a given individual. In particular, such a selection is made possible by the distinctive reference colours of the different samples 10 of the set.

The selection is performed by the individual himself or by a third party while taking account of the desires and/or needs of the individual. For example, the third party is a beauty professional, such as a hairdresser, a stylist, an aesthetician or a makeup artist.

For example, in the context of dyeing the hair (or more generally hairs), the selection consists in selecting the sample 10 corresponding to a target dye colour. Alternatively, the selection consists in selecting the sample 10 corresponding to the natural colour of the hair of the individual or the current colour of the hair of the individual (in particular when the hair has already been dyed).

In another example, when the considered body zone is skin, for example, the skin of the face, the selection consists in selecting the sample 10 corresponding to the natural colour of the skin or to a target dye colour for the skin (for example for a foundation).

The selection of the sample 10 at the top to the left is illustrated in the example of Figure 4.

Afterwards, the determination method comprises a step 110 of acquiring, by the sensor 13 of the determination device 12, an image, so-called initial image IM, imaging both a body zone of the individual and the selected sample 10. In particular, the identifier 10A of the selected sample 10 is visible in the initial image M.

For example, during this acquisition step 110, the sample 10 is positioned next to the body zone (for example the hair) of the individual. Alternatively, the sample 10 is superimposed over the body zone of the individual.

The obtained initial image IM is illustrated in the example of Figure 4.

The determination method comprises a step 120 of processing the initial image IM. The processing step 120 is implemented by the calculator 14 in interaction with the computer program product 18, i.e. is implemented by computer.

The processing step 120 allows obtaining, from the initial image IM:

- - the sample reference data $D_{ref_E}$ of the sample 10 imaged on the initial image IM, and
- a colorimetric data representative of the actual colour of the sample 10 on the initial image IM, so-called sample actual data $D_{r_E}$. In particular, the actual colour takes account of the conditions of the environment (brightness, lighting...) in which the individual is located.

It should be understood that each of the sample reference data $D_{ref_E}$ and of the sample actual data $D_{r_E}$ could actually correspond to a data set. For example, in the space CIE L*a*b, each of these data corresponds to a data relating to the clarity L, a data relating to the parameter a* and a data relating to the parameter b*.

In the example of implementation, the sample reference data $D_{ref_E}$ is obtained according to the identifier 10A of said sample 10 and the database 11 accessible by the calculator 14.

In the example of implementation, the processing step 120 comprises highlighting the sample 10 on the initial image IM and determining the sample actual data $D_{r_E}$ on the portion of the initial image IM featuring the sample 10.

For example, highlighting is carried out by segmentation, which allows extracting the sample 10 from the rest of the environment on the initial image IM. In another example, highlighting is carried out by extraction of the zone around the identifier 10A of the sample 10 on the initial image IM after identification of the identifier 10A on the initial image IM.

Afterwards, the sample reference data $D_{ref_E}$ is determined from the colorimetric data of the pixels corresponding to the found zone.

In another example, the sample reference data $D_{ref_E}$ is obtained similarly to the method described in the US application US 2020/342630 A.

The sample reference data $D_{ref_E}$ and the sample actual data $D_{r_E}$ form parameters for the coloration of the body zone of the individual. Thus, such parameters could be used to determine a coloration suitable to an individual, and taking into account the rendering differences due to the environment.

Optionally, the determination method comprises a step 130 of determining the influence of the environment on the colorimetric rendering of the body zone of the individual. The determination step 130 is implemented by the calculator 14 in interaction with the computer program product 18, i.e. is implemented by computer.

The determination step 130 is carried out by comparing the sample reference data $D_{ref_E}$ with the sample actual data $D_{r_E}$.

For example, the comparison allows obtaining a colorimetric discrepancy parameter. In particular, the colorimetric discrepancy parameter depends on at least one quantity representative of the colorimetric space. For example, in the space CIE L*a*b, the deviation parameter is according to at least one of the lightness L, of the parameter a* and of the parameter b*.

For example, the colorimetric discrepancy parameter is obtained by means of the following formula:

$$\Delta E = \sqrt{(\Delta L^*)^2 + (\Delta a^*)^2 + (\Delta b^*)^2} \qquad (1)$$

Where:

- *ΔE* denotes the colorimetric discrepancy parameter, also called error or deviation, between the sample reference data $D_{ref_E}$ and the sample actual data $D_{r_E}$,
- *ΔL** is the difference between the clarity of the sample reference data $D_{ref_E}$ and the clarity of the sample actual data $D_{r_E}$ in the space CIE L*a*b,
- *Δa** is the difference between the parameter a* of the sample reference data $D_{ref_E}$ and the parameter a* of the sample actual data $D_{r_E}$ in the space CIE L*a*b, and
- *Δb** is the difference between the parameter b* of the sample reference data $D_{ref_E}$ and the parameter b* of the sample actual data $D_{r_E}$ in the space CIE L*a*b.

Preferably, the determination step comprises a step 140 of virtual try-on ("try-on") of the selected sample 10. The virtual try-on step 140 is implemented by the calculator 14 in interaction with the computer program product 18, i.e. is implemented by computer.

The virtual try-on step 140 comprises modifying the initial image IM according to the sample actual data $D_{r_E}$ so that the colour of the body zone of the individual on the initial image IM is replaced by the actual colour of the sample 10 on the initial image IM. The modified initial image IM forms a rendered image $IM_R$. An example of a rendered image $IM_R$ is illustrated by Figure 4.

Possibly, during this step 140, a rendering model as described in the documents US 20200160153 A or US 9 449 412 B, is applied, allowing improving the virtual try-on.

The virtual try-on step 140 also comprises displaying the rendered image $IM_R$ on a display, such as the display 30 of the calculator 14.

Preferably, the determination method comprises a step 150 of determining a coloration relating to the body zone of the individual following the reception of a command validating the rendered image $IM_R$. The determination step 150 is implemented by the calculator 14 in interaction with the computer program product 18, i.e. is implemented by computer.

For example, the validation command is sent by the individual or another person (hairdresser) to the calculator 14 via the human-machine interface of the calculator 14. The command indicates that the colorimetric rendering of the selected sample 10 suits the individual, and could serve as a basis for the determination of a coloration.

The coloration is determined according to the initial image IM, the sample reference data $D_{ref_E}$ and the sample actual data $D_{r_E}$.

In particular, in an example of implementation, the determination step 150 comprises determining a colorimetric data representative of the actual colour of the body zone of the individual on the initial image IM, so-called individual actual data $D_{r_I}$. For example, the individual actual data $D_{r_I}$ is obtained in the same way as the sample actual data $D_{r_E}$ (highlighting the pixels corresponding to the body zone of the individual on the initial image IM and extracting the colorimetric data of said pixels).

Afterwards, the coloration relating to the body zone of the individual is determined according to the individual actual data $D_{r_I}$, the sample reference data $D_{ref_E}$ and the sample actual data $D_{r_E}$. In particular, in an example of implementation, the determination step 150 further comprises determining a colorimetric discrepancy according to the sample reference data $D_{ref_E}$ and the sample actual data $D_{r_E}$. For example, the colorimetric discrepancy is that one determined during the determination step 130.

Afterwards, the determination step 150 comprises determining a colorimetric data representative of a reference colour for the body zone of the individual, so-called individual reference data $D_{ref_I}$, according to the individual actual data $D_{r_I}$ and the discrepancy. The individual reference data $D_{ref_I}$ is the colour of the body zone of the individual compensated for the conditions of the environment (brightness, lighting, ...) in which the individual is located and taking as a reference the sample reference data $D_{ref_E}$.

Afterwards, the coloration of the body zone of the individual is determined according to the individual reference data $D_{ref_I}$ and the sample reference data $D_{ref_E}$.

For example, the coloration is determined according to a method as described in the application WO 2020/193654 A.

Thus, the present method allows facilitating the obtainment of parameters useful to the determination of a suitable coloration for a body zone of an individual, for example, hairs such as hair.

In particular, the initial image IM allows obtaining both the reference colour of the sample and its actual colour (according to rendering in the environment). These data also allow deducing information on the rendering conditions (lighting, brightness), and thus gain greater accuracy in the colorimetric renderings determined later on. In particular, these data could be used afterwards to feed a virtual try-on engine or to determine the colour of the body zone of the individual, or a desired coloration for the body zone of the individual.

Furthermore, the implementation of the method is very simple since the data are obtained through an image capture.

Thus, such a method allows facilitating and improving accuracy in the determination of parameters for the coloration of a body zone of an individual, and in particular in the selection of a capillary coloration product the application of which has an effect that is almost immediate end difficult to change instantaneously.

Those skilled in the art will understand that the embodiments described hereinabove can be combined to form new embodiments, provided that they are technically compatible.

## Claims

1. A method for determining parameters relative to the coloration of a body zone of an individual, such as hairs, skin, or a nail, the method comprising the steps of:

    a. selecting a sample (10) for an individual amongst a set of samples (10), each sample (10) of the set being a sample representative of a body zone and having a reference colour distinct from the other samples (10), each sample (10) having an identifier (10A) visible on the sample (10), the identifier (10A) of each sample (10) being associated with a colorimetric data representative of the reference colour of the sample (10), so-called sample reference data ($D_{ref_E}$), the sample reference data ($D_{ref_E}$) of each identifier (10A) being memorised in a database (11),
    b. acquiring, by a sensor (13), an image, so-called initial image (IM), imaging both the selected sample (10) and a corresponding body zone of the individual,
    c. processing the initial image (IM), by a calculator (14), so as to obtain:

        i. the sample reference data ($D_{ref_E}$) of the sample (10) imaged on the initial image (IM) according to the identifier (10A) of said sample (10) and the database (11) accessible by the calculator (14),
        ii. a colorimetric data representative of the actual colour of the sample (10) on the initial image (IM), so-called sample actual data ($D_{r_E}$),
        the sample reference data ($D_{ref_E}$) and the sample actual data ($D_{r_E}$) forming parameters relative to the coloration of the body zone of the individual.

2. The method according to claim 1, wherein the method comprises a step of determining, by the calculator (14), the influence of the environment on the colorimetric rendering of the body zone of the individual by comparison of the sample reference data ($D_{ref_E}$) with the sample actual data ($D_{r_E}$).

3. The method according to claim 1 or 2, wherein the method comprises a step of virtual try-on of the selected sample (10), comprising:

    a. modifying, by the calculator (14), the initial image (IM) according to the sample actual data ($D_{r_E}$) so that the colour of the body zone of the individual on the initial image (IM) is replaced by the actual colour of the sample on the initial image (IM), the modified initial image (IM) forming a rendered image ($IM_R$), and
    b. displaying the rendered image ($IM_R$) on a display (30).

4. The method according to claim 3, wherein the method comprises a step of determining, by the calculator (14), a coloration for the body zone of the individual according to the initial image (IM), the sample reference data ($D_{ref_E}$) and the sample actual data ($D_{r_E}$), upon reception of a command validating the rendering image ($IM_R$).

5. The method according to claim 4, wherein the step of determining a coloration comprises determining a colorimetric data representative of the actual colour of the body zone of the individual on the initial image (IM), called individual actual data ($D_{r_I}$), the coloration of the body zone of the individual being determined according to the individual actual data ($D_{r_I}$), the sample reference data ($D_{ref_E}$) and the sample actual data ($D_{r_E}$).

6. The method according to claim 5, wherein the step of determining a coloration further comprises:

    a. determining a colorimetric discrepancy between the sample reference data ($D_{ref_E}$) and the sample actual data ($D_{r_E}$),
    b. determining a colorimetric data representative of a reference colour for the body area of the individual, so-called individual reference data ($D_{ref_I}$), according to the individual actual data ($D_{r_I}$) and the discrepancy,
    the coloration of the body zone of the individual being determined according to the individual reference data ($D_{ref_I}$) and the sample reference data ($D_{ref_E}$).

7. The method according to any one of claims 1 to 6, wherein the processing step comprises highlighting the sample (10)

on the initial image (IM) and determining the sample actual data ($D_{r_E}$) over the portion of the initial image (IM) featuring the sample (10).

**8.** The method according to claim 7, wherein highlighting is carried out by segmentation or is carried out by extraction of the zone around the identifier (10A) of the sample (10) on the initial image (IM) after identification of the identifier (10A) on the initial image (IM).

**9.** The method according to any one of claims 1 to 8, wherein the samples (10) are selected from the list including: photographs, post-its, fabrics, figurines, miniature products and real or fake samples of parts of the human body, such as locks of hair, imitation skin samples, fake eyelashes, fake eyebrows or fake nails.

**10.** The method according to any one of claims 1 to 9, wherein the identifier (10A) is selected from among: a number, a series of alphanumeric characters, a barcode, a radio identification marker, a near-field communication marker and a marker allowing a visual identification.

**11.** A device (12) for determining parameters relative to the coloration of a body zone of an individual, such as hairs, skin, or a nail, following the selection of a sample (10) for an individual amongst a set of samples (10), each sample (10) of the set being a sample representative of a body zone and having a reference colour distinct from the other samples (10), each sample (10) having an identifier (10A) visible on the sample (10), the identifier (10A) of each sample (10) being associated with a colorimetric data representative of the reference colour of the sample (10), so-called sample reference data ($D_{ref_E}$), the sample reference data ($D_{ref_E}$) of each identifier (10A) being memorised in a database (11), the device (12) comprising:

a. a sensor (13) capable of acquiring an image, so-called initial image (IM) imaging both the selected sample (10) and a corresponding body zone of the individual,
b. a calculator (14) having access to the database (11), the calculator (14) being configured to process the initial image (IM) so as to obtain:

i. the sample reference data ($D_{ref_E}$) of the sample (10) imaged on the initial image (IM) according to the identifier (10A) of said sample (10) and the database (11) accessible by the calculator (14),
ii. a colorimetric data representative of the actual colour of the sample (10) on the initial image (IM), so-called sample actual data ($D_{r_E}$),
the sample reference data ($D_{ref_E}$) and the sample actual data ($D_{r_E}$) forming parameters relative to the coloration of the body zone of the individual.

## Patentansprüche

**1.** Verfahren zur Bestimmung von Parametern bezüglich der Färbung einer Körperzone eines Individuums, wie z. B. Haare, Haut oder einem Nagel, wobei das Verfahren die folgenden Schritte umfasst:

a. Auswählen einer Probe (10) für ein Individuum aus einem Satz von Proben (10), wobei jede Probe (10) des Satzes eine Probe ist, die repräsentativ für eine Körperzone ist und eine Referenzfarbe aufweist, die verschieden von den andere Proben (10) ist, wobei jede Probe (10) ein Kennung (10A) aufweist, die auf der Probe (10) sichtbar ist, wobei die Kennung (10A) jeder Probe (10) kolorimetrischen Daten zugewiesen ist, die repräsentativ für die Referenzfarbe der Probe (10) sind, den sogenannten Probenreferenzdaten ($D_{ref_E}$), wobei die Probenreferenzdaten ($D_{ref_E}$) jeder Kennung (10A) in einer Datenbank (11) gespeichert sind,
b. Erfassen, durch einen Sensor (13), eines Bildes, des sogenannten anfänglichen Bildes (IM), das sowohl die ausgewählte Probe (10) als auch eine entsprechende Körperzone des Individuums abbildet,
c. Verarbeiten des anfänglichen Bildes (IM) durch einen Rechner (14), um Folgendes zu erhalten:

i. die Probereferenzdaten ($D_{ref_E}$) der Probe (10), die auf dem anfänglichen Bild (IM) abgebildet sind, gemäß der Kennung (10A) der Probe (10) und der Datenbank (11), auf die vom Rechner (14) zugegriffen werden kann,
ii. kolorimetrische Daten, die die tatsächliche Farbe der Probe (10) auf dem anfänglichen Bild (IM) repräsentieren, die sogenannten tatsächlichen Daten ($D_{r_E}$),
wobei die Probereferenzdaten ($D_{ref_E}$) und die tatsächlichen Probedaten ($D_{r_E}$) Parameter mit Bezug auf die Färbung der Körperzone des Individuums bilden.

**2.** Verfahren nach Anspruch 1, wobei das Verfahren einen Schritt des Bestimmens, durch den der Rechner (14), des Einflusses der Umgebung auf die kolorimetrische Wiedergabe der Körperzone des Individuums durch Vergleichen der Probereferenzdaten ($D_{ref_E}$) mit den aktuellen Probedaten ($D_{r_E}$) umfasst.

**3.** Verfahren nach Anspruch 1 oder 2, wobei das Verfahren einen Schritt des virtuellen Anprobierens der ausgewählten Probe (10) umfasst, umfassend:

a. Modifizieren, durch den Rechner (14), des anfänglichen Bildes (IM) gemäß den tatsächlichen Probedaten ($D_{r_E}$), sodass die Farbe der Körperzone des Individuums auf dem anfänglichen Bild (IM) durch die tatsächliche Farbe der Probe auf dem anfänglichen Bild (IM) ersetzt wird, wobei das modifizierte anfängliche Bild (IM) ein gerendertes Bild ($IM_R$) bildet, und
b. Anzeigen des gerenderten Bildes ($IM_R$) auf einem Display (30).

**4.** Verfahren nach Anspruch 3, wobei das Verfahren einen Schritt des Bestimmens, durch den Rechner (14), einer Färbung für die Körperzone des Individuums gemäß dem anfänglichen Bild (IM), den Probereferenzdaten ($D_{ref_E}$) und den tatsächlichen Probedaten ($D_{r_E}$) nach Empfang eines Befehls zur Validierung des gerenderten Bildes ($IM_R$) umfasst.

**5.** Verfahren nach Anspruch 4, wobei der Schritt des Bestimmens einer Färbung das Bestimmen von kolorimetrischen Daten umfasst, die repräsentativ für die tatsächliche Farbe der Körperzone des Individuums auf dem anfänglichen Bild (IM) sind, den tatsächlichen individuellen Daten ($D_{r_I}$), wobei die Färbung der Körperzone des Individuums gemäß den tatsächlichen individuellen Daten ($D_{r_I}$), den Probereferenzdaten ($D_{ref_E}$) und den tatsächlichen Probedaten ($D_{r_E}$) bestimmt wird.

**6.** Verfahren nach Anspruch 5, wobei der Schritt des Bestimmens einer Färbung weiter Folgendes umfasst:

a. Bestimmen einer kolorimetrischen Abweichung zwischen den Probereferenzdaten ($D_{ref_E}$) und den tatsächlichen Probedaten ($D_{r_E}$),
b. Bestimmen von kolorimetrischen Daten, die repräsentativ für eine Referenzfarbe für den Körperbereich des Individuums sind, sogenannten individuellen Referenzdaten ($D_{ref_I}$), gemäß den tatsächlichen individuellen Daten ($D_{r_I}$) und der Abweichung,
wobei die Färbung der Körperzone des Individuums gemäß den individuellen Referenzdaten ($D_{ref_I}$) und den Probenreferenzdaten ($D_{ref_E}$) bestimmt wird.

**7.** Verfahren nach einem der Ansprüche 1 bis 6, wobei der Verarbeitungsschritt das Hervorheben der Probe (10) im anfänglichen Bild (IM) und das Bestimmen der tatsächlichen Probedaten ($D_{r_E}$) über dem Abschnitt des anfänglichen Bildes (IM) umfasst, der die Probe (10) enthält.

**8.** Verfahren nach Anspruch 7, wobei das Hervorheben durch Segmentierung durchgeführt wird oder durch Extraktion der Zone um die Kennung (10A) der Probe (10) auf dem anfänglichen Bild (IM) nach der Identifizierung der Kennung (10A) auf dem anfänglichen Bild (IM) erfolgt.

**9.** Verfahren nach einem der Ansprüche 1 bis 8, wobei die Proben (10) ausgewählt sind aus der Liste, die Folgendes beinhaltet: Fotografien, Post-its, Stoffe, Figuren, Miniaturprodukte und echte oder künstliche Proben von Teilen des menschlichen Körpers, wie z.B. Haarsträhnen, künstliche Hautproben, künstliche Wimpern, künstliche Augenbrauen oder künstliche Fingernägel.

**10.** Verfahren nach einem der Ansprüche 1 bis 9, wobei die Kennung (10A) ausgewählt ist aus: einer Zahl, einer alphanumerischen Zeichenfolge, einem Barcode, einem RFID-Chip, einem NFC-Chip und einem Marker, der eine visuelle Identifizierung ermöglicht.

**11.** Vorrichtung (12) zur Bestimmung von Parametern bezüglich der Färbung einer Körperzone eines Individuums wie z.B. Haaren, Haut oder einem Nagel, nach dem Auswählen einer Probe (10) für ein Individuum aus einem Satz von Proben (10), wobei jede Probe (10) des Satzes eine Probe ist, die repräsentativ für eine Körperzone ist und eine Referenzfarbe aufweist, die verschieden von den anderen Proben (10) ist, wobei jede Probe (10) eine Kennung (10A) aufweist, die auf der Probe (10) sichtbar ist, wobei die Kennung (10A) jeder Probe (10) kolorimetrischen Daten zugewiesen ist, die repräsentativ für die Referenzfarbe der Probe (10) sind, den sogenannten Probenreferenzdaten ($D_{ref_E}$), wobei die Probenreferenzdaten ($D_{ref_E)}$ jeder Kennung (10A) in einer Datenbank (11) gespeichert sind, wobei die Vorrichtung (12) Folgendes umfasst:

a. einen Sensor (13), der dazu in der Lage ist, ein Bild, das sogenannte anfängliche Bild (IM), zu erfassen, das sowohl die ausgewählte Probe (10) als auch eine entsprechende Körperzone des Individuums abbildet;
b. einen Rechner (14) mit Zugriff auf die Datenbank (11), wobei der Rechner (14) konfiguriert ist, um das anfängliche Bild (IM) zu verarbeiten, um Folgendes zu erhalten:

i. die Probereferenzdaten ($D_{ref_E}$) der Probe (10), die auf dem anfänglichen Bild (IM) abgebildet sind, gemäß der Kennung (10A) der Probe (10) und der Datenbank (11), auf die vom Rechner (14) zugegriffen werden kann,
ii. kolorimetrische Daten, die repräsentativ für die tatsächliche Farbe der Probe (10) auf dem anfänglichen Bild (IM) sind, die sogenannten aktuellen Probedaten ($D_{r_E}$),
wobei die Probereferenzdaten ($D_{ref_E}$) und die tatsächlichen Probedaten ($D_{r_E}$) Parameter mit Bezug auf die Färbung der Körperzone des Individuums bilden.

## Revendications

1. Procédé de détermination de paramètres relatifs à la coloration d'une zone corporelle d'un individu, telle que des poils, de la peau, ou un ongle, le procédé comprenant les étapes de :

a. sélection d'un échantillon (10) pour un individu parmi un ensemble d'échantillons (10), chaque échantillon (10) de l'ensemble étant un échantillon représentatif d'une zone corporelle et ayant une couleur de référence distincte des autres échantillons (10), chaque échantillon (10) ayant un identifiant (10A) visible sur l'échantillon (10), l'identifiant (10A) de chaque échantillon (10) étant associé à une donnée colorimétrique représentative de la couleur de référence de l'échantillon (10), dite donnée de référence échantillon ($D_{ref_E}$), la donnée de référence échantillon ($D_{ref_E}$) de chaque identifiant (10A) étant mémorisée dans une base de données (11),
b. l'acquisition, par un capteur (13), d'une image, dite image initiale (IM), imageant à la fois l'échantillon (10) sélectionné et une zone corporelle correspondante de l'individu,
c. le traitement de l'image initiale (IM), par un calculateur (14), de sorte à obtenir :

i. la donnée de référence échantillon ($D_{ref_E}$) de l'échantillon (10) imagé sur l'image initiale (IM) en fonction de l'identifiant (10A) dudit échantillon (10) et de la base de données (11) accessible par le calculateur (14),
ii. une donnée colorimétrique représentative de la couleur réelle de l'échantillon (10) sur l'image initiale (IM), dite donnée réelle échantillon ($D_{r_E}$),
la donnée de référence échantillon ($D_{ref_E}$) et la donnée réelle échantillon ($D_{r_E}$) formant des paramètres relatifs à la coloration de la zone corporelle de l'individu.

2. Procédé selon la revendication 1, dans lequel le procédé comprend une étape de détermination, par le calculateur (14), de l'influence de l'environnement sur le rendu colorimétrique de la zone corporelle de l'individu par comparaison de la donnée de référence échantillon ($D_{ref_E}$) à la donnée réelle échantillon ($D_{r_E}$).

3. Procédé selon la revendication 1 ou 2, dans lequel le procédé comprend une étape d'essayage virtuel de l'échantillon (10) sélectionné, comprenant :

a. la modification, par le calculateur (14), de l'image initiale (IM) en fonction de la donnée réelle échantillon ($D_{r_E}$) de sorte que la couleur de la zone corporelle de l'individu sur l'image initiale (IM) soit remplacée par la couleur réelle de l'échantillon sur l'image initiale (IM), l'image initiale (IM) modifiée formant une image de rendu ($IM_R$), et
b. l'affichage de l'image de rendu ($IM_R$) sur un afficheur (30).

4. Procédé selon la revendication 3, dans lequel le procédé comprend une étape de détermination, par le calculateur (14), d'une coloration pour la zone corporelle de l'individu en fonction de l'image initiale (IM), de la donnée de référence échantillon ($D_{ref_E}$) et de la donnée réelle échantillon ($D_{r_E}$), suite à la réception d'une commande de validation de l'image de rendu ($IM_R$).

5. Procédé selon la revendication 4, dans lequel l'étape de détermination d'une coloration comprend la détermination d'une donnée colorimétrique représentative de la couleur réelle de la zone corporelle de l'individu sur l'image initiale (IM), dite donnée réelle individu ($D_{r_I}$), la coloration de la zone corporelle de l'individu étant déterminée en fonction de la donnée réelle individu ($D_{r_I}$), de la donnée de référence échantillon ($D_{ref_E}$) et de la donnée réelle échantillon ($D_{r_E}$).

**6.** Procédé selon la revendication 5, dans lequel l'étape de détermination d'une coloration comprend en outre :

a. la détermination d'une déviation colorimétrique entre la donnée de référence échantillon ($D_{ref_E}$) et la donnée réelle échantillon ($D_{r_E}$),
b. la détermination d'une donnée colorimétrique représentative d'une couleur de référence pour la zone corporelle de l'individu, dite donnée de référence individu ($D_{ref_I}$), en fonction de la donnée réelle individu ($D_{r_I}$) et de la déviation,
la coloration de la zone corporelle de l'individu étant déterminée en fonction de la donnée de référence individu ($D_{ref_I}$) et de la donnée de référence échantillon ($D_{ref_E}$).

**7.** Procédé selon l'une quelconque des revendications 1 à 6, dans lequel l'étape de traitement comprend la mise en évidence de l'échantillon (10) sur l'image initiale (IM) et la détermination de la donnée réelle échantillon ($D_{r_E}$) sur la portion de l'image initiale (IM) mettant en évidence l'échantillon (10).

**8.** Procédé selon la revendication 7, dans lequel la mise en évidence est réalisée par une segmentation ou est réalisée par extraction de la zone située autour de l'identifiant (10A) de l'échantillon (10) sur l'image initiale (IM) après identification de l'identifiant (10A) sur l'image initiale (IM).

**9.** Procédé selon l'une quelconque des revendications 1 à 8, dans lequel les échantillons (10) sont choisis dans la liste constituée de : des photographies, des post-it, des tissus, des figurines, des produits miniatures et des échantillons réels ou factices de parties du corps humain, tels que des mèches de cheveux, des échantillons de fausse peau, des faux-cils, des faux-sourcils ou des faux ongles.

**10.** Procédé selon l'une quelconque des revendications 1 à 9, dans lequel l'identifiant (10A) est choisi parmi : un numéro, une succession de caractères alphanumériques, un code-barre, un marqueur de radio-identification, un marqueur de communication en champ proche et un marqueur permettant une identification visuelle.

**11.** Dispositif (12) de détermination de paramètres relatifs à la coloration d'une zone corporelle d'un individu, telle que des poils, de la peau, ou un ongle, suite à la sélection d'un échantillon (10) pour un individu parmi un ensemble d'échantillons (10), chaque échantillon (10) de l'ensemble étant un échantillon représentatif d'une zone corporelle et ayant une couleur de référence distincte des autres échantillons (10), chaque échantillon (10) ayant un identifiant (10A) visible sur l'échantillon (10), l'identifiant (10A) de chaque échantillon (10) étant associé à une donnée colorimétrique représentative de la couleur de référence de l'échantillon (10), dite donnée de référence échantillon ($D_{ref_E}$), la donnée de référence échantillon ($D_{ref_E}$) de chaque identifiant (10A) étant mémorisée dans une base de données (11), le dispositif (12) comprenant :

a. un capteur (13) propre à acquérir une image, dite image initiale (IM), imageant à la fois l'échantillon (10) sélectionné et une zone corporelle correspondante de l'individu,
b. un calculateur (14) ayant accès à la base de données (11), le calculateur (14) étant configuré pour traiter l'image initiale (IM) de sorte à obtenir :

i. la donnée de référence échantillon ($D_{ref_E}$) de l'échantillon (10) imagé sur l'image initiale (IM) en fonction de l'identifiant (10A) dudit échantillon (10) et de la base de données (11) accessible par le calculateur (14),
ii. une donnée colorimétrique représentative de la couleur réelle de l'échantillon (10) sur l'image initiale (IM), dite donnée réelle échantillon ($D_{r_E}$),
la donnée de référence échantillon ($D_{ref_E}$) et la donnée réelle échantillon ($D_{r_E}$) formant des paramètres relatifs à la coloration de la zone corporelle de l'individu.

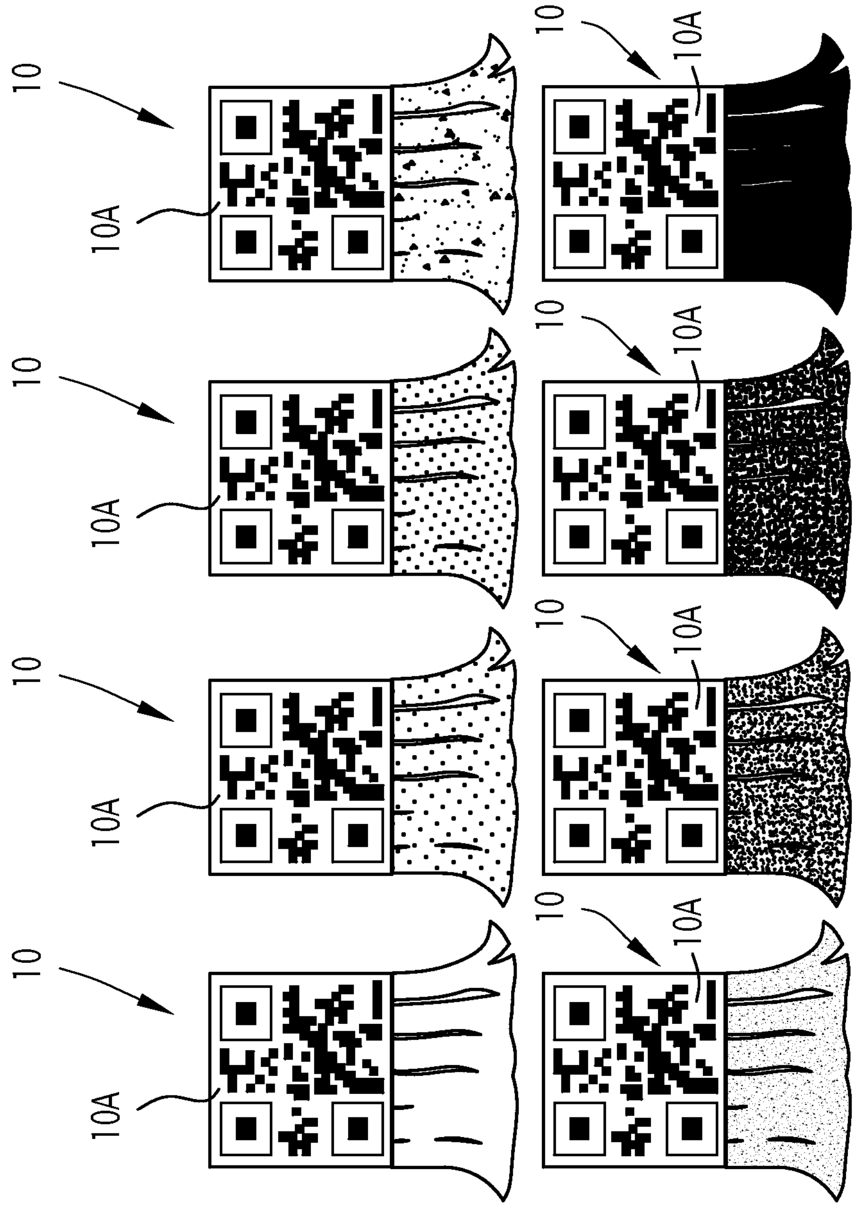


FIG.1

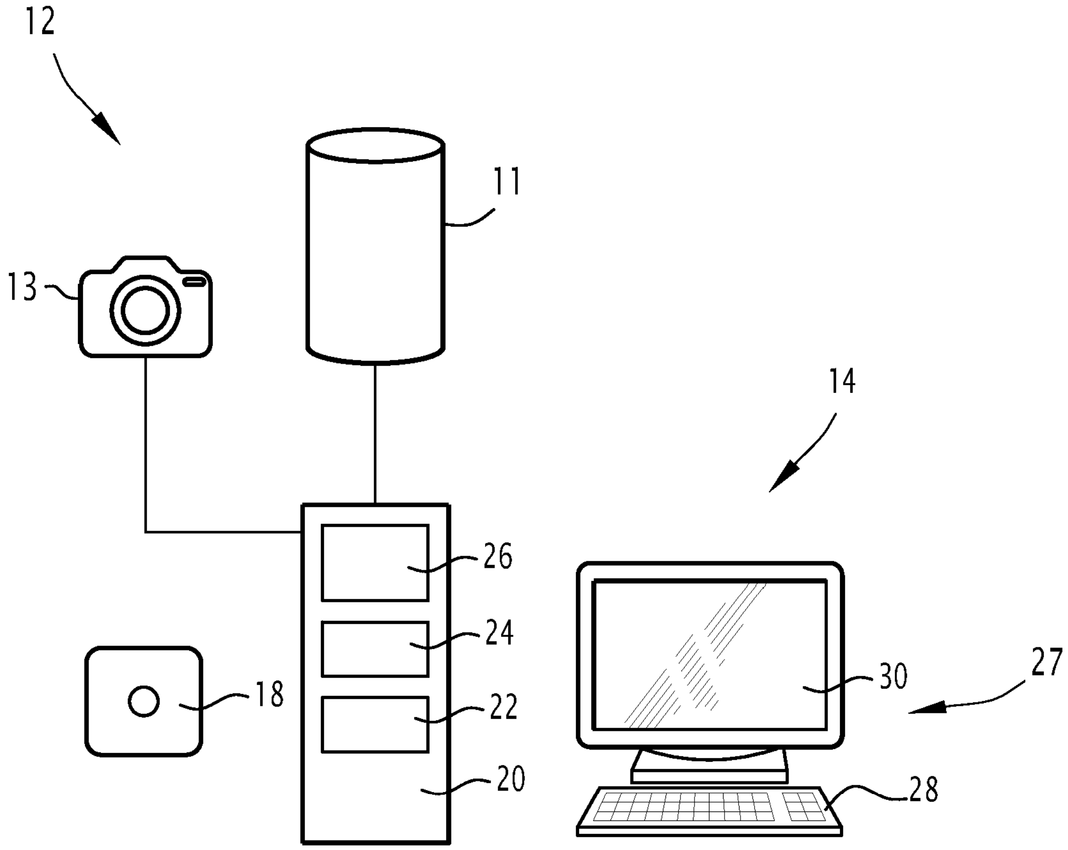


FIG.2

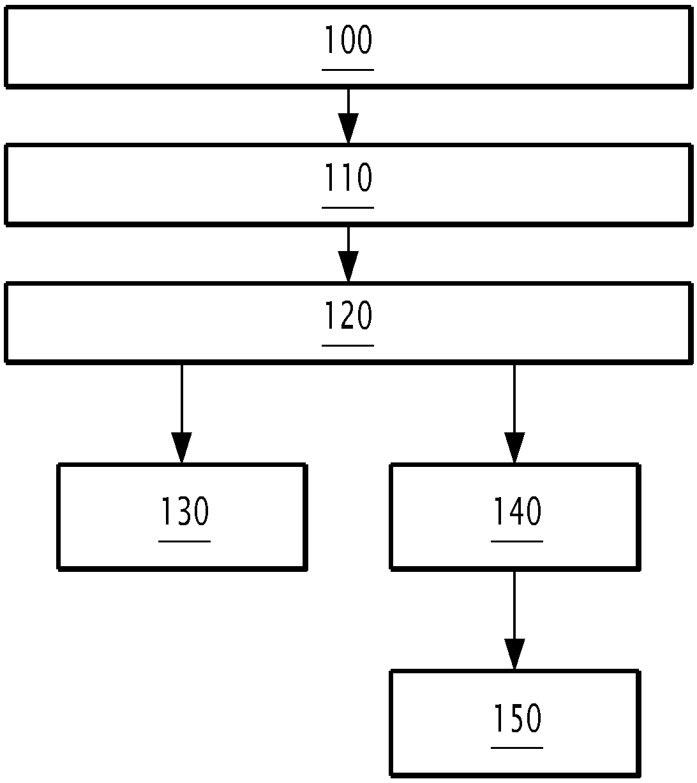


FIG.3

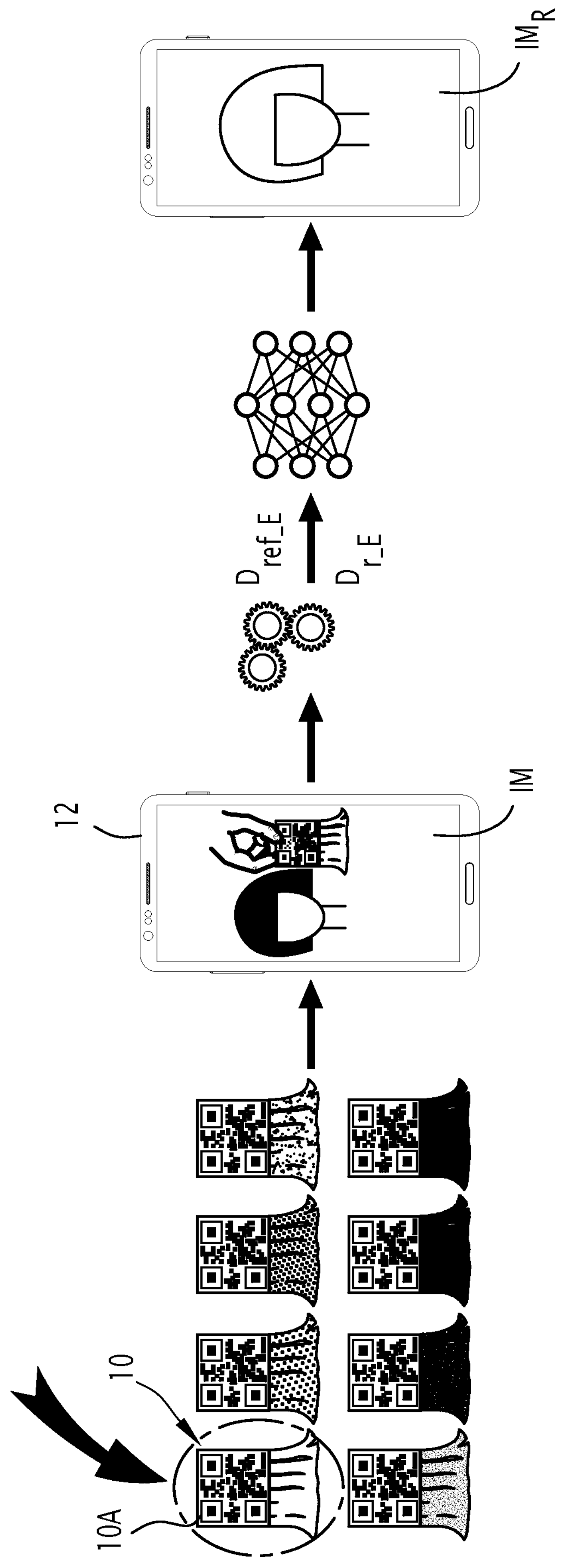


FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0443741 A
- WO 2004002300 A2
- US 9316580 B
- US 20140216492 A
- US 20100328667 A
- US 20200160153 A1
- US 9449412 B1
- FR 2106030
- FR 2111155
- FR 2111164
- FR 3097730 A1
- WO 2005124302 A1
- US 2020342630 A
- US 20200160153 A
- US 9449412 B
- WO 2020193654 A


### Non-patent literature cited in the description


- **MEEREH CANDICE KIM et al.** Color reproduction in virtual lip makeup using a convolutional neural network. *COLOR RESEARCH & APPLICATION*, vol. 45 (6), 1190-1201